# EUROPÄISCHE PATENTANMELDUNG

(11) **EP 2 631 503 A1**
(43) Veröffentlichungstag der Anmeldung: **28.08.2013**
(21) Anmeldenummer: 13155162.4
(22) Anmeldetag: 14.02.2013
(51) Int. Cl.: F16D 65/18, F16D 65/56, F16D 121/02

(54) **Scheibenbremse mit einer Belagverschleissnachstellvorrichtung und Verfahren zum Einstellen eines Lüftspiels**

(30) Priorität: 22.02.2012 DE 102012003506
(71) Anmelder: KNORR-BREMSE Systeme für Nutzfahrzeuge GmbH, 80809 München (DE)
(72) Erfinder: Baumgartner, Johann, 85368 Moosburg (DE)
(74) Vertreter: Schönmann, Kurt

(57) **Zusammenfassung**

Eine Scheibenbremse (1), insbesondere für ein Kraftfahrzeug, mit einer Zuspannvorrichtung, vorzugsweise mit einem Bremsdrehhebel (4), mit einer Belagverschleißnachstellvorrichtung, weist mindestens einen mechanischen Verschleißnachsteller (10, 10'), der vorzugsweise in eine Spindeleinheit (3, 3') der Scheibenbremse (1) einsetzbar ist, und mindestens eine elektrische Justiereinrichtung (30) auf, wobei der mindestens eine mechanische Verschleißnachsteller (10, 10') vorzugsweise mit dem Bremsdrehhebel (9) gekoppelt ist. Der mindestens eine mechanische Verschleißnachsteller (10, 10') und die mindestens eine elektrische Justiereinrichtung (30) sind gemeinsam auf einer Seite, vorzugsweise der Zuspannseite, der Scheibenbremse (1) angeordnet, und ein Verfahren zum Einstellen eines Lüftspiels der Scheibenbremse (1).

## Beschreibung

Die Erfindung betrifft eine Scheibenbremse, insbesondere für ein Kraftfahrzeug, nach dem Oberbegriff des Anspruchs 1. Die Erfindung bezieht sich auch auf ein Verfahren zum Einstellen eines Lüftspiels einer entsprechenden Scheibenbremse

Derartige Scheibenbremsen sind üblicherweise druckluftbetätigt und mit automatisch wirkenden, mechanischen Belagverschleißnachstellvorrichtungen ausgestattet. Diese Belagverschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Belagverschleißnachstellvorrichtung z.B. durch eine Verstellbewegung von längenveränderlichen Druckstempeln. Ein Lüftspiel, das z.B. durch Wärmeausdehnung zu gering geworden ist, können sie jedoch nicht vergrößern.

Ein Beispiel einer Nachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet.

Elektrisch angetriebene und elektronisch geregelte Belagverschleißnachstellvorrichtungen wie z.B. in DE 10139908 A1 bei einer Scheibenbremse mit Nachstellsystem beschrieben korrigieren das Lüftspiel in beiden Richtungen und ermöglichen darüber hinaus zusätzliche Funktionen, wie z.B. Lüftspiel- und Verschleißmessung. Es werden auch Mischformen als denkbar angesprochen, z.B. mit einer Nachstelleinrichtung mit Elektromotor auf der Reaktionsseite der Bremsscheibe und mit einer mechanisch mit dem Drehhebel gekoppelten Nachstelleinrichtung auf der Seite der Zuspanneinrichtung der Scheibenbremse.

Gegen die ausschließliche Abhängigkeit des Lüftspiels der Bremse von einer in der Radbremse befindlichen elektronischen Steuerung gibt es jedoch starke Vorbehalte, so dass sich diese elektrische/elektronische Nachstellvorrichtungen bisher nicht durchsetzen konnten.

Die Aufgabe der vorliegenden Erfindung besteht darin, eine verbesserte Scheibenbremse zu schaffen.

Eine weitere Aufgabe ist, ein verbessertes Verfahren zum Einstellen eines Lüftspiels für eine Scheibenbremse bereitzustellen.

Die Aufgabe wird durch eine Scheibenbremse mit den Merkmalen des Anspruchs 1, ein Verfahren mit den Merkmalen des Anspruchs 14 und ein Verfahren mit den Merkmalen des Anspruchs 20 gelöst.

Die erfindungsgemäße Scheibenbremse weist eine Belagverschleißnachstellvorrichtung auf, welche die Zuverlässigkeit der bekannten mechanisch wirkenden Nachstellvorrichtungen besitzt, jedoch gleichzeitig die mit einer elektrischen Nachstellvorrichtung, die elektronisch geregelt ist, erzielbaren Vorteile nutzbar macht. Die Belagverschleißnachstellvorrichtung umfasst mindestens einen mechanischen Verschleißnachsteller und mindestens eine elektrische Justiereinrichtung, die gemeinsam auf einer Seite, vorzugsweise der Zuspannseite, der Scheibenbremse angeordnet sind. Dadurch ist auch eine einfache Wartung möglich.

Eine erfindungsgemäße Scheibenbremse insbesondere für ein Kraftfahrzeug, mit einer Zuspannvorrichtung, vorzugsweise mit einem Bremsdrehhebel, mit einer Belagverschleißnachstellvorrichtung, welche mindestens einen mechanischen Verschleißnachsteller, der vorzugsweise in eine Spindeleinheit der Scheibenbremse einsetzbar ist, und mindestens eine elektrische Justiereinrichtung aufweist, wobei der mindestens eine mechanische Verschleißnachsteller vorzugsweise mit dem Bremsdrehhebel gekoppelt ist, ist dadurch gekennzeichnet, dass der mindestens eine mechanische Verschleißnachsteller und die mindestens eine elektrische Justiereinrichtung gemeinsam auf einer Seite, vorzugsweise der Zuspannseite, der Scheibenbremse angeordnet sind.

Ein erfindungsgemäßes Verfahren zum Einstellen eines Lüftspiels der oben genannten Scheibenbremse weist die Verfahrensschritte auf:
(S1) Ermitteln eines Betriebszustands der Scheibenbremse; (S2) Ermitteln eines Reibepunkts durch Anlegen des Bremsbelags an die Bremsscheibe der Scheibenbremse mittels der mindestens einen elektrischen Justiereinrichtung; (S3) Zurückstellen des Bremsbelags mittels der mindestens einen elektrischen Justiereinrichtung;
und (S4) Einstellen des Lüftspiels der Scheibenbremse.

Ein alternatives, erfindungsgemäßes Verfahren zum Einstellen eines Lüftspiels der oben genannten Scheibenbremse weist die Verfahrensschritte auf:
(S1') Ermitteln eines Betriebszustands der Scheibenbremse; (S2') Ermitteln eines Reibepunkts durch Anlegen des Bremsbelags an die Bremsscheibe der Scheibenbremse durch Zuspannen der Scheibenbremse, wobei ein Verstellweg eines Zuspannelementes, vorzugsweise des Bremsdrehhebels, erfasst wird, und wobei der mechanische Verschleißnachsteller betätigt wird; (S3') Erfassen eines Stillstands einer Verstellspindel; (S4') Speichern des erfassten Verstellwegs bei Stillstand der Verstellspindel als aktuelles Lüftspiel; und (S5') Einstellen des Lüftspiels der Scheibenbremse durch Justieren mittels der elektrischen Justiereinrichtung.

Auf diese Weise ist eine Grobeinstellung des Lüftspiels durch den mechanischen Verschleißnachsteller und eine Feineinstellung durch die elektrische Justiereinrichtung möglich.

Weitere vorteilhafte Ausgestaltungen sind in den Unteransprüchen angegeben.

In einer Ausführung sind der mindestens eine mechanischen Verschleißnachsteller und die mindestens eine elektrische Justiereinrichtung unabhängig voneinander mit der Spindeleinheit der Scheibenbremse gekoppelt. So kann eine unabhängige Verschleißnachstellung erfolgen.

Dazu steht die mindestens eine elektrische Justiereinrichtung mit einer Gewindehülse, welche in einer Brücke der Scheibenbremse drehbar aufgenommen ist und mit einer Verstellspindel der Spindeleinheit zusammenwirkt, in Eingriff. Dies ergibt einen kompakten Aufbau.

Wenn die Scheibenbremse mindestens zwei Spindeleinheiten aufweist, wobei der mechanische Verschleißnachsteller mit einem Mitnehmer über eine erste Synchronisationseinheit gekoppelt ist, wirkt jede Verstellspindel der mindestens zwei Spindeleinheiten mit jeweils einer Gewindehülse zusammen, wobei die Gewindehülsen über eine zweite Synchronisationseinheit gekoppelt sind. Die Justiereinrichtung kann auch mit der zweiten Synchronisationseinheit in Eingriff stehen.

In einer alternativen Ausführung ist die mindestens eine elektrische Justiereinrichtung mit einer Nachstellerwelle des mechanischen Verschleißnachstellers gekoppelt. So kann ein Eingriff in den Kraftfluss des Verschleißnachstellers unabhängig von dessen Antrieb erfolgen.

Wenn die Scheibenbremse mindestens zwei Spindeleinheiten aufweist, wobei der mechanische Verschleißnachsteller, mit einem Mitnehmer über eine erste Synchronisationseinheit gekoppelt ist, kann die mindestens eine elektrische Justiereinrichtung mit der ersten Synchronisationseinrichtung gekoppelt sein. Hieraus ergibt sich ein platzsparender Aufbau.

In einer weiteren Ausführung weist die elektrische Justiereinrichtung eine Getriebeeinheit mit mindestens zwei Getriebestufen auf, von denen eine mit der ersten Synchronisationseinrichtung gekoppelt ist. Natürlich sind auch weitere Getriebestufen für eine Feineinstellung durch den mechanischen Verschleißnachsteller möglich.

In einer anderen Ausführung ist die elektrische Justiereinrichtung über einer der Nachstellwellen des mechanischen Verschleißnachstellers angeordnet. Dies kann z.B. über der Mittelachse des Mitnehmers sein, wodurch Bauraum sparend ausgenutzt wird.

Es ist vorgesehen, dass die Justiereinrichtung eine elektrische, vorzugsweise elektronisch gesteuerte, Antriebseinrichtung aufweist. Die elektronische Steuerung kann mit einem Bremssteuergerät verbunden oder auch in diesem integriert sein.

In einer Ausführung ist vorgesehen, dass die Justiereinrichtung ein Gehäuse aufweist, in welchem die Antriebseinrichtung und eine Getriebeeinheit aufgenommen sind und welches an einem Bremssattel der Scheibenbremse angebracht ist. Dadurch ergibt sich ein kompakter und gegen Umwelteinflüsse (Staub, Feuchtigkeit) geschützter Aufbau.

In einer weiteren Ausführung ist vorgesehen, dass die Scheibenbremse mindestens eine Verstellspindelsensoreinheit aufweist. Dies kann z.B. ein Winkelsensor mit geringerem Einbauraum sein, mit welchem einerseits ein Verstellweg und somit der Verschleiß und andererseits ein Reibepunkt bei Stillstand der Verstellspindeln ermittelbar ist.

In einer besonders vorteilhaften Ausführung weist die Justiereinrichtung die mindestens eine Verstellspindelsensoreinheit auf. Dazu kann die Justiereinrichtung z.B. einen elektronisch gesteuerten Elektromotor, z.B. Außenläufer, mit eigener Positionserkennung umfassen. Die Positionserkennung kann als Verstellspindelsensoreinheit verwendet werden, wenn der Elektromotor in Kopplung mit den Verstellspindeln angetrieben wird, wenn die Verstellspindeln von dem mechanischen Verschleißnachsteller verstellt werden.

In einer noch weiteren Ausführung kann die Scheibenbremse mindestens eine Bremsdrehhebelsensoreinheit aufweisen. Dadurch ergibt sich ein großer Variationsbereich zur Ausgestaltung der Scheibenbremse, z.B. mit Druckluftbetätigung, wenn ein Bremsdrehhebel vorgesehen ist. Anstelle des Drehhebelsensors kann natürlich auch ein anderer Sensortyp verwendet werden, welcher eine Zuspannbewegung der Zuspanneinrichtung der Scheibenbremse erfasst.

Die oben beschrieben Scheibenbremse kann eine druckluftbetätigte Scheibenbremse sein.

In einer Ausführung umfasst der Verfahrensschritt (S2) Ermitteln des Reibepunkts die Teilschritte (S2.1) Aktivieren der elektrischen Justiereinrichtung zur Verstellung von Verstellspindeln zum Zustellen des Bremsbelags; (S2.2) Erfassen eines Drehwinkels eines Elektromotors der elektrischen Justiereinrichtung zur Ermittlung eines Verstellwegs des Bremsbelags ab Start des Elektromotors; (S2.3) Ermitteln des Blockierens bzw. Stillstehens des Elektromotors durch Erreichen des Reibepunkts; und (S2.4) Zuordnen des erfassten Drehwinkels des Elektromotors bei Erreichen des Reibepunkts einem aktuellen Lüftspiel und Verwenden als Referenzwert des Reibepunkts.

Weiterhin ist vorgesehen, dass der Verfahrensschritt (S3) Zurückstellen des Bremsbelags folgende Teilschritte umfasst: (S3.1) Vergleichen des aktuellen Lüftspiels mit einem vorher festlegbaren Lüftspielsollwert; (S3.2) Speichern einer Differenz als Verschleißwert, wenn das aktuelle Lüftspiel größer als der vorher festlegbare Lüftspielsollwert ist, oder (S3.3) Speichern einer Differenz als Verkleinerungswert, wenn das aktuelle Lüftspiel kleiner als der vorher festlegbare Lüftspielsollwert ist; (S3.4) Verwenden des aktuellen Lüftspiels als Referenzwert; und
(S3.5) Aktivieren der elektrischen Justiereinrichtung zur Verstellung der Verstellspindeln zum Lösen des Bremsbelags und Erfassen des Drehwinkels des Elektromotors der elektrischen Justiereinrichtung zur Ermittlung des Verstellwegs des Bremsbelags ab Start des Elektromotors.

Außerdem ist vorgesehen, dass der Teilschritt (S3.5) Aktivieren der elektrischen Justiereinrichtung ausgeführt wird, wenn der Teilschritt (S3.1) Vergleichen des aktuellen Lüftspiels keine Differenz ergibt.

Weiterhin umfasst der Verfahrensschritt (S4) Einstellen des Lüftspiels die Teilschritte (S4.1) Vergleichen des ermittelten Verstellwegs mit dem vorher festlegbaren Lüftspielsollwert; und (S4.2) Einstellen des Lüftspiels durch Anhalten des Elektromotors der elektrischen Justiereinrichtung bei Erreichen des vorher festlegbaren Lüftspielsollwerts.

Außerdem umfasst der Verfahrensschritt (S1) Ermitteln des Betriebszustands die Teilschritte (S1.1) Ermitteln des Betriebszustands der Scheibenbremse; und (S1.2) Aktivieren einer Verstellspindelsensoreinheit oder einer Positionserkennung eines Elektromotors der elektrischen Justiereinrichtung.

Ein alternatives Verfahren weist im Verfahrensschritt (S2) Ermitteln des Reibepunkts die Teilschritte (S2.1) Beaufschlagen eines Druckluftzylinders mit Anlegedruck oder Aktivieren einer Zuspanneinrichtung der Scheibenbremse (1); (S2.2) Erfassen der Bewegung der Verstellspindel mittels der Verstellspindelsensoreinheit oder der Positionserkennung des Elektromotors der Justiereinrichtung (30); und (S2.3) Erfassen einer Verstellbewegung, vorzugsweise des Hebelwegs des Bremsdrehhebels.

Eine weitere Ausführung des alternativen Verfahrens sieht vor, dass der Verfahrensschritt (S5) Lösen der zugespannten Scheibenbremse und Einstellen des Lüftspiels der Scheibenbremse folgende Teilschritte umfasst: (S5.1) Lösen der Scheibenbremse; (S5.2) Ausschalten der Verstellspindelsensoreinheit oder der Positionserkennung des Elektromotors der Justiereinrichtung (30); und (S5.3) Einstellen des Lüftspiels der Scheibenbremse durch Justieren mittels der elektrischen Justiereinrichtung.

Eine noch weitere Ausführung des alternativen Verfahrens sieht vor, dass das Justieren mittels der elektrischen Justiereinrichtung zum Einstellen des Lüftspiels zur Vergrößerung des Lüftspiels durchgeführt wird, wenn das im Verfahrensschritt (S4') ermittelte aktuelle Lüftspiel kleiner als ein vorher festlegbarer Lüftspielsollwert ist, und dass das Justieren mittels der elektrischen Justiereinrichtung zum Einstellen des Lüftspiels zur Verkleinerung des Lüftspiels durchgeführt wird, wenn das im Verfahrensschritt (S4') ermittelte aktuelle Lüftspiel größer als der vorher festlegbare Lüftspielsollwert ist.

Diese Kombination von mechanischem Verschleißnachsteller und elektrischer Justiereinrichtung, die elektronisch gesteuert ist, weist vorteilhaft die folgenden Eigenschaften auf:
- Zuverlässige Wirkung durch den mechanischen Verschleißnachsteller.
- Präzise Lüftspieleinstellung, Lüftspielmessung und Justierung durch die elektrische Justiereinrichtung, die elektronisch gesteuert ist.
- Messung des Bremsbelagverschleißes.
- Vollständige Lüftspieleinstellung und Lüftspieljustage in einem Einstellvorgang.
- Aufgrund einer präzisen und situationsabhängigen Justierung ist ein kleineres Betriebslüftspiel möglich.
- Die geringen Rechts-/Linksabweichungen des Lüftspiels ermöglichen die Anwendungen einer stärkeren Progression des Übersetzungsverhältnisses und damit eine weitere Reduzierung des Betätigungshubes, was auch zu Energieeinsparungen führt.
- Bei Ausfall der elektrischen Justiereinrichtung arbeitet der mechanische Verschleißnachsteller unabhängig weiter.
- Bei Ausfall des mechanischen Verschleißnachstellers übernimmt die elektrische Justiereinrichtung dessen Aufgabe vollständig.

Die Erfindung wird nun anhand beispielhafter Ausführungen mit Bezug auf die beigefügten Zeichnungen näher erläutert. Hierbei zeigen:
- Fig. 1: eine schematische Schnittansicht eines ersten Ausführungsbeispiels einer erfindungsgemäßen Scheibenbremse mit einer Belagverschleißnachstellvorrichtung;
- Fig. 2: eine schematische Schnittansicht eines zweiten Ausführungsbeispiels der erfindungsgemäßen Scheibenbremse;
- Fig. 3...4: Flussdiagramme eines ersten Ausführungsbeispiels eines erfindungsgemäßen Verfahrens; und
- Fig. 5...6: Flussdiagramme eines zweiten Ausführungsbeispiels des erfindungsgemäßen Verfahrens.

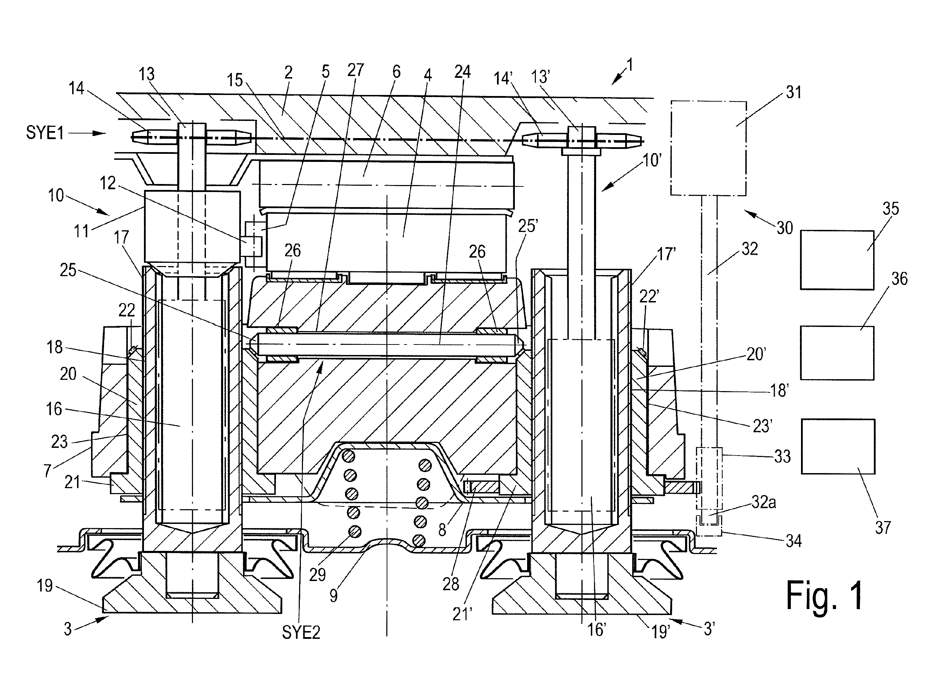

In Fig. 1 ist eine schematische Schnittansicht eines ersten Ausführungsbeispiels einer erfindungsgemäßen Scheibenbremse 1 mit einer Belagverschleißnachstellvorrichtung dargestellt.

Die Scheibenbremse 1 ist hier in einer Ausführung als zweistempelige Bremse mit einem Bremssattel 2 und zwei Spindeleinheiten 3, 3' mit ihrer Zuspannseite gezeigt. Der Bremssattel 2 ist nur teilweise dargestellt und übergreift eine nicht gezeigte Bremsscheibe, an welcher beidseitig ebenfalls nicht gezeigte Bremsbeläge angeordnet sind. Ein zuspannseitiger, nicht gezeigter Bremsbelag steht mit den Spindeleinheiten 3, 3' über Druckstücke 19, 19' in Verbindung, der andere Bremsbelag ist auf der anderen Seite der Bremsscheibe im Bremssattel 2 festgelegt. Der Bremssattel 2 kann beispielsweise ein Schiebesattel sein.

Die Belagverschleißnachstellvorrichtung umfasst hier einen Verschleißnachsteller 10 und eine Justiereinrichtung 30, welche unten noch im Detail beschrieben werden. Der Verschleißnachsteller 10 ist hier mit einem Mitnehmer 10' gekoppelt und mit diesem als mechanischer Verschleißnachsteller ausgebildet. Eine erste Synchronisationseinheit SYE1 dient zum Zweck der Synchronisation des ersten Verschleißnachstellers 10 mit dem Mitnehmer 10'. Die Justiereinrichtung 30 ist als elektrischer Belagverschleißnachsteller ausgebildet.

Ein Bremsdrehhebel 4 zum Zuspannen der Scheibenbremse 1 ist hier über eine Lagerwalze 6 am Bremssattel 2 verschwenkbar gelagert und weist in diesem ersten Ausführungsbeispiel einen Nachstellantriebsabschnitt 5, z.B. in Zahnform, zum Antrieb des Verschleißnachstellers 10 auf.

Ein Abstand zwischen dem Bremsbelag bzw. den Bremsbelägen und der Bremsscheibe wird als Lüftspiel bezeichnet. Bei einem Bremsvorgang wird bei Betätigung der Bremse zunächst das Lüftspiel überbrückt, indem der Bremsbelag gegen die Bremsscheibe der Bremse verstellt wird. Aufgrund des Verschleißes der Bremsbeläge und auch der Bremsscheibe wird das Lüftspiel vergrößert. Die Belagverschleißnachstellvorrichtung dient zur Einstellung des Lüftspiels auf einen vorher einstellbaren üblichen Wert. Unter dem Begriff "Einstellung" ist hierbei sowohl ein Zustellen in Richtung auf die Bremsscheibe zur Verkleinerung des Lüftspiels als auch ein Rückstellen von der Bremsscheibe weg zur Vergrößerung des Lüftspiels zu verstehen.

Der Begriff "Reibepunkt" ist der Punkt, in welchem der Bremsbelag an der Bremsscheibe der Scheibenbremse 1 anliegt. Der Reibepunkt wird beim Zuspannen nach Überbrückung des Lüftspiels erreicht. Weiteres Zuspannen bewirkt dann durch Anpressen des Bremsbelags an die Bremsscheibe eine Bremsung. Ein Lösen der Zuspannvorrichtung bewirkt eine Umkehrung des oben beschriebenen Vorgangs.

Die Spindeleinheiten 3, 3' sind jeweils über eine Gewindehülse 20, 20' in einer Brücke 7 aufgenommen. Die Brücke 7 ist von dem Bremsdrehhebel 4 in Richtung auf die Bremsscheibe zum Zuspannen mit den Spindeleinheiten 3, 3' verschiebbar im Bremssattel 2 angeordnet. Eine Rückstellfeder 29, die zwischen einer unterhalb der Brücke 7 angebrachten Platte 8 und einer Abdeckplatte 9 angebracht ist, ist zur Rückstellung der Brücke 7 bei gelöster Bremse vorgesehen.

Jede Spindeleinheit 3, 3' umfasst eine Verstellspindel 17, 17', an deren zum Bremsbelag gewandten Enden jeweils eins der Druckstücke 19, 19' angebracht ist. Die Verstellspindeln 17, 17' erstrecken sich mit ihren Enden durch Öffnungen der Abdeckplatte 9 zur Bremsscheibe hindurch, wobei diese Enden bzw. die Druckstücke 19, 19' jeweils über Dichtungsmittel, z.B. Faltenbälge, mit der Abdeckplatte 9 verbunden sind. Jede Verstellspindel 17, 17' ist hohl mit einer Innenverzahnung, z.B. Keilprofil, ausgebildet. Diese Innenverzahnungen stehen jeweils mit einer Außenverzahnung eines nur angedeuteten Nachstellabtriebs 16, 16' in Eingriff.

Der in Fig. 1 auf der linken Seite dargestellte Nachstellabtrieb 16 ist Bestandteil des Verschleißnachstellers 10 und steht mit einer Nachstellerwelle 13 in Verbindung. Die Nachstellerwelle 13 verläuft koaxial zu der Verstellspindel 17, parallel zu einer nicht gezeigten Bremsscheibenachse und rechtwinklig zu einer Schwenkachse der Lagerwalze 6. Oberhalt des zuspannseitigen Endes der Verstellspindel 17 ist eine Antriebseinheit 11 um die Nachstellerwelle 13 herum angeordnet und mit dieser in nicht näher gezeigter Weise, z.B. über eine Überlastkupplung, gekoppelt. Die Antriebseinheit 11 ist nur angedeutet. Ihre Funktion kann z.B. dem Dokument DE 102004037771 entnommen werden. Ein Antriebsabschnitt 12 in Zahnform, der zum Bremsdrehhebel 4 weist, ist an der Antriebseinheit 11 radial von dieser hervorstehende angebracht und steht mit dem Nachstellantriebsabschnitt 5 des Bremsdrehhebels 4 in Eingriff. Das zuspannseitige Ende der Nachstellerwelle 13 ist hier mit einem Synchronrad 14 drehfest verbunden. Das Synchronrad 14 steht über ein Synchronmittel 15 mit einem Synchronrad 14' des Mitnehmers 10' in Verbindung. Die Synchronräder 14, 14' und das Synchronmittel 15 bilden die erste Synchronisationseinheit SYE1, welche unten noch weiter erläutert wird.

Der Verschleißnachsteller 10 wird bei jeder Zustellbewegung des Bremsdrehhebels 4 über den Eingriff des Nachstellantriebsabschnitt 5 des Bremsdrehhebels 4 und des Antriebsabschnitts 12 der Antriebseinheit 11 angetrieben. Ist (noch) kein Verschleiß vorhanden, dann erfolgt aufgrund der Überlastkupplung der Antriebseinheit 11 keine Übertragung einer Antriebsbewegung auf die Nachstellerwelle 13. Liegt jedoch ein Verschleiß vor, so wird die Antriebsbewegung auf die Nachstellerwelle 13 durch die Überlastkupplung der Antriebseinheit 11 übertragen. Mittels der ersten Synchronisationseinheit SYE1 wird diese Antriebsbewegung der Nachstellerwelle 13 auf den Mitnehmer 10' übertragen.

Der Mitnehmer 10' ist parallel zu Verschleißnachsteller 10 angeordnet und in ähnlicher Weise wie dieser aufgebaut. Im Unterschied zu dem Verschleißnachsteller 10 weist der Mitnehmer keine Antriebseinheit 11 auf. Das Kettenrad 14' ist auf dem zuspannseitigen Ende einer Mitnehmerwelle 13' angeordnet, welche an ihrem belagseitigen Ende mit dem zugehörigen Nachstellabtrieb 16' verbunden ist.

Jede Verstellspindel 3, 3' ist mit einem Außengewinde 18, 18' versehen und jeweils in eine Gewindehülse 20, 20' eingeschraubt. Die Gewindehülsen 20, 20' sind mit einer kreiszylindrischen Außenfläche jeweils in einer Durchgangsbohrung 23, 23' der Brücke 7 verdrehbar aufgenommen. Jede Gewindehülse 20, 20' ist an ihrem zum Bremsbelag weisenden Ende mit einem Kragen 21,21' versehen, der größer als die jeweilige Durchgangsbohrung 23, 23' ist einen axialen Anschlag der jeweiligen Gewindehülse 20, 20' in den Durchgangsbohrungen 23, 23' zur Zuspannseite hin bildet. Die Seiten der Kragen 21, 21', welche zum Bremsbelag weist, liegen auf Abschnitten der Platte 8 auf und werden von dieser in der Brücke 7 axial gehalten. Natürlich sind auch andere axiale Festlegungen möglich, wie z.B. Sicherungsringe.

Die Gewindehülsen 20, 20' sind durch eine zweite Synchronisationseinheit SYE2 gekoppelt. In diesem Ausführungsbeispiel ist die zweite Synchronisationseinheit SYE2 mit einer Synchronisationswelle 24 ausgebildet, welche parallel zu der Lagerwalze 6 in der Brücke 7 verdrehbar angeordnet ist. Die Synchronisationswelle 24 erstreckt sich dabei durch eine Durchgangsbohrung 27 der Brücke 7. An jedem Ende ist die Synchronisationswelle 24 über eine Buchse 26 in der Durchgangsbohrung 27 gelagert. Anstelle der Buchsen 26 können natürlich auch z.B. Nadellager zum Einsatz kommen.

Die Synchronisationswelle 24 steht mit ihren beiden Enden jeweils mit einer der Gewindehülsen 20, 20' in Eingriff. Dazu weist jedes Ende der Synchronisationswelle 24 eine Synchronisationsverzahnung 25, 25' auf, welche jeweils mit einer zugehörigen Verzahnung 22, 22' an dem jeweiligen zuspannseitigen Ende der jeweiligen Gewindehülse 20, 20' in Eingriff steht. Die Verzahnung ist hier als Kegelradverzahnung ausgebildet. Auf diese Weise sind die Gewindehülsen 20, 20' untereinander durch die zweite Synchronisationseinheit SYE2 gekoppelt.

Der Aufbau der ersten und zweiten Synchronisationseinheit SYE1, SYE2 ist voneinander abhängig. Dies wird unten noch im Detail erläutert.

Der Kragen 21' der Gewindehülse 20' des Mitnehmers 10' ist hier mit einem Zahnring 28 versehen, welcher mit dem Kragen 21' drehfest verbunden ist. Natürlich kann eine Verzahnung auch direkt in den Kragen 21' eingeformt sein.

Die Gewindehülse 20' des Mitnehmers 10' ist über den Zahnring 28 mit einer Justiereinrichtung 30 gekoppelt. Die Justiereinrichtung 30 ist hier nur schematisch gezeigt. Sie ist elektrisch bzw. elektromechanisch ausgebildet und umfasst eine Antriebseinrichtung 31, eine Antriebswelle 32 und ein Antriebsritzel 33.

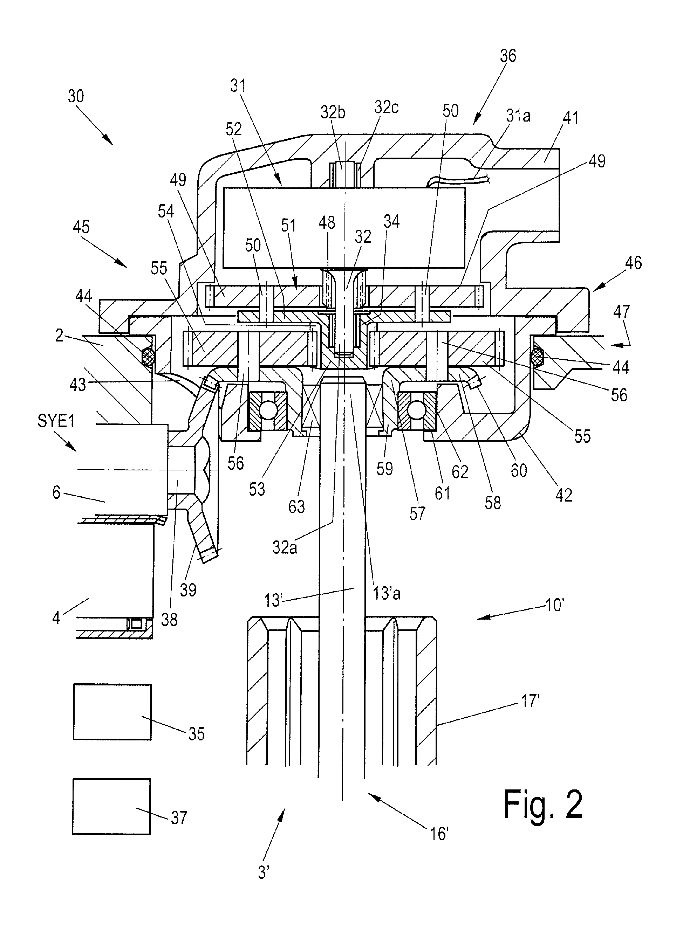

Die Antriebseinrichtung 31 weist einen nicht näher gezeigten Elektromotor mit einer Steuerung auf. Die Steuerung kann in der Antriebseinrichtung 31, separat oder/und z.B. in einem Bremssteuergerät 35 angeordnet sein. Die Antriebseinrichtung 31 kann außerdem ein Getriebe, beispielsweise ein Planetengetriebe wie im Zusammenhang mit Fig. 2 beschrieben, aufweisen. Dieses Getriebe kann z.B. innerhalb der Antriebseinrichtung 31 oder/und am Ende der Antriebswelle 32 in der Nähe des Zahnrings 28 angeordnet sein.

An einem Ende der Antriebswelle 32 ist die Antriebseinrichtung 31 angeordnet, wobei das Antriebsritzel 33 an dem anderen Ende, hier als Antriebsende 32a bezeichnet, der Antriebswelle 32 vorgesehen ist. Das Antriebsende 32a ist außerdem in einem Antriebslager 34, z.B. einer Lagerbuchse, am Bremssattel 2 gelagert.

Das Antriebsritzel 33 ist mit einer sich in Axialrichtung der Antriebswelle 32 erstreckende Verzahnung versehen, welche mit dem Zahnring 28 in Eingriff steht. Aufgrund der Länge der Verzahnung des Antriebsritzels 33 verbleibt der Zahnring 28 bei axialer Bewegung der Brücke 7 (Bremsvorgang, Nachstellvorgang) und somit der Gewindehülse 20' mit dem Antriebsritzels 33 in Eingriff.

In einem normalen Betrieb der Scheibenbremse 1 ist die Justiereinrichtung 30 nicht aktiviert, d.h. die Antriebseinrichtung 31 befindet sich im Stillstand und ist dadurch blockiert. Über den Eingriff des Antriebsritzels 33 mit dem Zahnring 28 der Gewindehülse 20' ist auf diese Weise auch die Gewindehülse 20' des Mitnehmers 10' blockiert. Und weiterhin ist auch die andere Gewindehülse 20 des Verschleißnachstellers 10 über die zweite Synchronisationseinheit SYE2 blockiert. Unter dem Begriff "blockiert" ist hier zu verstehen, dass eine Verdrehung der Gewindehülsen 20, 20' verhindert ist.

Wird nun beim Zuspannen bei einem vorhandenen Verschleiß der Bremsbeläge der Verschleißnachsteller 10 mit dem über die ersten Synchronisationseinheit SYE1 gekoppelten Mitnehmer 10' durch die Zuspannbewegung des Bremsdrehhebels 4 verstellt, so erfolgt eine Verdrehung der Nachstellerwelle 13 und der Mitnehmerwelle 13' und der mit diesen gekoppelten Verstellspindeln 17, 17' innerhalb der blockierten Gewindehülsen 20, 20', derart, dass aufgrund der Außengewinde 18, 18' der Verstellspindeln 17, 17' und der zugehörigen Innengewinde der Gewindehülsen 20, 20' eine axiale Verstellung der Verstellspindeln 17, 17' zusammen mit den Druckstücken 19, 19' und somit des Bremsbelags auf die Bremsscheibe hin erfolgt.

Nach dem Lösen der Scheibenbremse 1 kann in bestimmten, vorgegebenen Betriebszuständen der Scheibenbremse 1, wenn keine Bremsung erfolgt, eine Justierung des Lüftspiels vorgenommen werden, indem die Justiereinrichtung 30 von ihrer Steuerung ausgelöst durch das Bremssteuergerät 35 aktiviert wird. Dies wird unten noch ausführlich erläutert. Daraufhin verdreht die Antriebseinrichtung 31 über die Antriebswelle 32 und das Antriebsritzel 33 die Gewindehülse 20' des Mitnehmers 10' und die mittels der zweiten Synchronisationseinheit SYE2 gekoppelte Gewindehülse 20 des Verschleißnachstellers 10 um einen Drehwinkel, der von der Steuerung anhand weiter unten beschriebener Messwerte und gespeicherter Datenwerte der Antriebseinrichtung 31 vorgegeben wird. In diesem Fall sind die Verstellspindeln 17, 17' aufgrund der Kopplung über die erste Synchronisationseinheit SYE1 blockiert bzw. an einer Verdrehung gehindert. Durch die von der Justiereinrichtung 30 gedrehten Gewindehülsen 20, 20' werden nun über deren Innengewinde die darin am Verdrehen gehinderten Verstellspindeln 17, 17' axial verstellt, bis das vorher festgelegte Lüftspiel erreicht ist.

Die oben erwähnte Abhängigkeit der Synchronisationseinheiten SYE1 und SYE2 voneinander soll nun erläutert werden.

Die Synchronisationseinheiten SYE1 und SYE2 sind so aufeinander abgestimmt, dass die Nachstellerwelle 13 und die Mitnehmerwelle 13' wie auch die Gewindehülsen 20, 20' mit gleichem Drehsinn oder mit entgegengesetztem Drehsinn jeweils untereinander gekoppelt sind.

In dem in Fig. 1 dargestellten ersten Ausführungsbeispiel ist die zweite Synchronisationseinheit SYE2 mit einer durchgehenden Synchronisationswelle 24 mit Synchronisationsverzahnungen 25, 25' gezeigt, welche mit entsprechenden Verzahnungen 22, 22' der Gewindehülsen 20, 20' in Eingriff stehen. Bei einer Drehung der Gewindehülse 20' wird diese Drehung auf die Gewindehülse 20 so übertragen, dass die Gewindehülse 20 sich im entgegengesetzten Drehsinn verdreht. Daraus ergibt sich, dass die Gewinde zwischen Verstellspindeln 17, 17' und den Gewindehülsen 20, 20' Gewinde mit entgegengesetztem Drehsinn sind, um eine axiale Verstellung der Verstellspindeln 17, 17' in eine gemeinsame Richtung zu gewährleisten. So ist zum Beispiel das Außengewinde 18 der Verstellspindel 17 ein Rechtsgewinde und das Außengewinde 18' der Verstellspindel 17 ein Linksgewinde.

Daher ist in diesem Fall unterschiedlicher Drehsinne der Gewinde der Gewindehülsen 20, 20' die erste Synchronisationseinheit SYE1 von der zweiten Synchronisationseinheit SYE2 dergestalt abhängig, dass eine Verdrehung der Nachstellerwelle 13 des Verschleißnachstellers 10 auch eine entgegengesetzte Verdrehung der Mitnehmerwelle 13' des Mitnehmers 10' bewirkt. Dies ist z.B. dadurch möglich, dass das Synchronmittel 15 ein Zahnradgetriebe, beispielsweise Stirnradgetriebe, mit einer solchen Anzahl von Zahnrädern ist, dass eine Kopplung entgegengesetzten Drehsinn der Nachstellerwelle 13 und der Mitnehmerwelle 13' bewirkt.

Werden im Gegensatz dazu Gewinde mit gleichem Drehsinn verwendet, so kann die erste Synchronisationseinheit SYE1 z.B. ein Zugmittel (Kette) als Synchronmittel 15 aufweisen, um einen gleichen Drehsinn der Nachstellerwelle 13 und der Mitnehmerwelle 13' zu erzeugen. Dabei besitzt dann die zweite Synchronisationseinheit SYE2 ein Zahnradgetriebe anstelle der Synchronisationswelle 24, so dass die Gewindehülsen 20, 20' für einen gleichen Drehsinn gekoppelt sind. Die Verzahnung 22, 22' der Gewindehülsen 20, 20' ist ebenfalls als Kegelradverzahnung ausgebildet, da so eine einfache Montage der Gewindehülsen 20, 20' in die Durchgangsbohrungen 23, 23' der Brücke 7 möglich ist.

Zur Erfassung eines Verstellwegs der Verstellspindeln 17, 17' ist hier eine Verstellspindelsensoreinheit 36 vorgesehen. Die Verstellspindelsensoreinheit 36 ist nicht näher dargestellt. Sie kann z.B. in der Antriebseinheit 31 angeordnet sein und die Umdrehungen des elektrischen Motors der Antriebseinheit 31 erfassen und in einen Axialweg der Verstellspindeln 17, 17' und somit des Bremsbelags umrechnen.

Zudem kann ein nicht gezeigter Winkelsensor, z.B. ein Potentiometer, mit der Nachstellerwelle 13 gekoppelt sein. Dabei wird aber nur die Verstellung der Nachstellerwelle 13 erfasst. Eine Einstellung bzw. Justierung der Verstellspindeln 17, 17' durch die Justiereinrichtung 30 wird durch die mit der Antriebseinrichtung 31 gekoppelte Verstellspindelsensoreinheit 36 ermittelt.

Außerdem ist eine Bremsdrehhebelsensoreinheit 37 vorgesehen. Auch die Bremsdrehhebelsensoreinheit 37 ist nur angedeutet. Sie erfasst den Schwenkwinkel des Bremsdrehhebels 4, z.B. mittels eines geeigneten Winkelsensors. Die Verstellspindelsensoreinheit 36 und die Bremsdrehhebelsensoreinheit 37 sind mit ihren Ausgängen elektrisch mit der Steuerung der Justiereinrichtung 30 oder/und mit dem Bremssteuergerät 35 verbunden. Damit ist eine Messung des Lüftspiels wie auch des Belagverschleißes möglich. Dies wird unten noch beschrieben.

Fig. 2 stellt eine schematische Schnittansicht eines zweiten Ausführungsbeispiels der erfindungsgemäßen Scheibenbremse 1 dar.

Im Gegensatz zu dem ersten Ausführungsbeispiel nach Fig. 1, in welchem die Justiereinrichtung 30 mit den Gewindehülsen 20, 20' und einer zweiten Synchronisationseinheit SYE2 gekoppelt ist, ist die Justiereinrichtung 30 in dem zweiten Ausführungsbeispiel nach Fig. 2 für einen Eingriff in eine erste Synchronisationseinheit SYE1, die schon vorhanden ist, angeordnet. Ein solcher Eingriff in die Synchronisationseinheit SYE1 kann dabei an einer beliebigen Stelle zwischen der Nachstellerwelle 13 und der Mitnehmerwelle 13' erfolgen. Besonders vorteilhaft ist beispielsweise jedoch der direkte Eingriff, z.B. die Anordnung der elektromotorischen Antriebseinrichtung 31 der Justiereinrichtung 30 auf der Nachstellerwelle 13 bzw. Mitnehmerwelle 13'. So kann der mechanische und elektrische/elektronische Teil zu einer kompakten Baugruppe zusammengefasst werden.

In Fig. 2 ist eine Ausführung gezeigt, bei welcher die elektromotorische Antriebseinrichtung 31 der Justiereinrichtung 30 auf dem Mitnehmer 10' einer zweistempeligen Scheibenbremse 1 (ähnlich Fig. 1) angeordnet ist. Dies kann aus Bauraumgründen vorteilhaft sein. Die ebenfalls mögliche Anordnung der Justiereinrichtung 30 auf dem Verschleißnachsteller 10 ist vergleichbar aufgebaut.

Die Justiereinrichtung 30 weist ein zweiteiliges Gehäuse, nämlich ein Motorgehäuse 40 und ein daran angebrachtes Lagerschild 42, welcher zwischen dem Motorgehäuse 40 und dem Mitnehmer 10' angeordnet ist, auf. Das Lagerschild 42 ist in einer Öffnung des Bremssattels 2 eingesetzt und gegenüber dem Bremssattel 2 mittels einer radial wirkenden Dichtung 44 abgedichtet. Auf diese Weise bildet das Lagerschild 42 eine Anbringung der Justiereinrichtung 30 an dem Bremssattel 2, z.B. indem das Motorgehäuse 40 mit einer Befestigung am Bremssattel 2 befestigt wird, wobei das Lagerschild 42 an dem Bremssattel 2 festgeklemmt wird.

Das Motorgehäuse 40 umgibt die Antriebseinrichtung 31, welche als Elektromotor (nur als Rechteck angedeutet), z.B. mit Außenläufer, ausgebildet und mit der Antriebswelle 32 mit einem Lagerende 32b in dem Motorgehäuse 40 an dessen Oberseite in einem Antriebslager 34 gelagert ist. Eine Anschlussleitung 31 a der Antriebseinrichtung 31 ist durch einen Anschlussabschnitt 41 des Motorgehäuses 40 nach außen geführt, z.B. über eine geeignete Steckverbindung. Die Antriebseinrichtung 31 weist außerdem die Verstellspindelsensoreinheit 36 auf, was unten noch erläutert wird. Die Anschlussleitung 31 a dient auch zum Anschluss der Verstellspindelsensoreinheit 36, d.h. zur Verbindung dieser und der Antriebseinrichtung 31 mit dem Bremssteuergerät 35.

Der Elektromotor der Antriebseinrichtung 31 ist über die Antriebswelle 32, die sich mit einem dem Lagerende 32b gegenüberliegenden Antriebsende 32a nach unten zur Mitnehmerwelle 13 erstreckt und mit dieser fluchtet, mit einer Getriebeeinheit 45 gekoppelt. Die Getriebeeinheit 45 ist hier als ein zweistufiges Planetengetriebe ausgebildet. Eine erste Getriebestufe 46 ist in dem unteren Abschnitt des Motorgehäuses 40 und eine zweite Getriebestufe 47 ist in dem Lagerschild 42 aufgenommen.

Die erste Getriebestufe 46 der Getriebeeinheit 45 umfasst ein erstes Sonnenrad 48, mehrere erste Planetenräder 49, von denen nur zwei gezeigt sind, und ein erstes Planetenträgerrad 51. Das erste Sonnenrad 48 ist auf der Antriebswelle 32 unterhalb des Elektromotors aufgebracht. Die ersten Planetenräder 49 sind mit ersten Planetenradachsen 50 auf einem ersten Planetenträger 52 des ersten Planetenträgerrads 51 drehbar befestigt. Das erste Planetenträgerrad 51 weist einen nach unten zur Mitnehmerwelle 13' gerichtete Nabe auf, die als Sonnenradabschnitt 53 ausgebildet ist und das Antriebsende 32a der Antriebseinrichtung 31 in einem Antriebslager 34 aufnimmt. Das erste Planetenträgerrad 51 ist mittels des Antriebslagers 34 um das Antriebsende 32 drehbar angeordnet.

Die zweite Getriebestufe 47 der Getriebeeinheit 45 umfasst ein zweites Sonnenrad 54, mehrere zweite Planetenräder 55, von denen ebenfalls nur zwei gezeigt sind, und ein zweites Planetenträgerrad 57. Das zweite Sonnenrad 54 ist am Sonnenradabschnitt 53 des ersten Planetenträgerrads 51 angebracht. Die zweiten Planetenräder 55 sind mit zweiten Planetenradachsen 56 auf einem zweiten Planetenträger 58 des zweiten Planetenträgerrads 57 drehbar befestigt. Das zweite Planetenträgerrad 57 weist einen nach unten zur Mitnehmerwelle 13' gerichteten Kupplungsabschnitt 59 auf. Der Kupplungsabschnitt 59 ist eine Nabe, in deren Innenbohrung die Mitnehmerwelle 13' mit einem Kupplungsende 13a über ein Kupplungselement 63 befestigt ist.

Das Kupplungselement 63 ist als eine spielfrei Drehmomentübertragungskupplung ausgebildet, welche geringe Schrägstellungen der Mitnehmerwelle 13' ausgleichen kann. In einer einfachen Ausführung kann das Kupplungselement 63 ein so genannter Toleranzring sein, der einer Wellfeder vergleichbar ausgebildet ist.

Auf dem Außendurchmesser des Kupplungsabschnitts 59 ist ein Lager 61, z.B. ein Wälzlager, aufgebracht, das in einer Lageraufnahme 62 des Lagerschilds 42 aufgenommen ist. Das zweite Planetenträgerrad 57 ist somit gegenüber dem Lagerschild 42 drehbar gelagert und bildet einen Abtrieb der Justiereinrichtung 30.

Das zweite Planetenträgerrad 57 weist eine weitere Funktion auf. Der umlaufende Außenrand des zweiten Planetenträgers 58 ist mit einer Verzahnung 60 versehen, die hier eine Kegelradverzahnung ist und mit einem Transmissionsrad 39 in Eingriff steht. Dazu ist das Lagerschild 42 mit einer Öffnung 43 versehen, welche diesen Eingriff ermöglicht.

Das Transmissionsrad 39 ist hier auf einem Ende einer Transmissionswelle 38 drehfest angebracht. Die Transmissionswelle 38 ist Bestandteil der Synchronisationseinheit SYE1, innerhalb der Lagerwalze 6 verdrehbar gelagert und bildet eine Synchronisationsverbindung zu der Nachstellerwelle 13, wobei ein weiteres, nicht gezeigtes Transmissionsrad an dem anderen Ende der Synchronisationsverbindung angebracht ist und mit der Nachstellerwelle 13 in Eingriff steht. Diese Synchronisationsverbindung kann aber auch direkt durch die Lagerwalze 6 gebildet sein.

Bei einem Zuspannen wird bei einem vorhandenen Verschleiß der Bremsbeläge die Nachstellerwelle 13 verdreht. Diese Drehbewegung wird über die Synchronisationsverbindung, d.h. hier die Transmissionswelle 38 und das Transmissionsrad 39 auf das zweite Planetenträgerrad 57 und durch dieses weiter über das Kupplungselement 63 auf die Mitnehmerwelle 13' übertragen. So erfolgt eine axiale Verstellung der Verstellspindeln 17, 17' zusammen mit den Druckstücken 19, 19' und somit des Bremsbelags in Richtung auf die Bremsscheibe.

Die Justiereinrichtung 30 ist bei diesem Vorgang nicht aktiviert. Aber die Verstellspindelsensoreinheit 36, welche in diesem zweiten Ausführungsbeispiel mit einer Positionserkennung in der Antriebseinrichtung 31 des Elektromotors verbunden ist oder einen Bestandteil davon bildet, ist eingeschaltet. D.h., dass die Positionserkennung und somit die Verstellspindelsensoreinheit 36 auch im nicht antreibenden Zustand der Antriebseinrichtung 31 aktiv ist. Auf diese Weise ermöglicht dieser Elektromotor mittels dieser Positionserkennung die Ermittlung des Verschleißzustandes der Bremsbeläge (und der Bremsscheibe) sowie die Messung des Lüftspiels in einem unten noch ausführlich beschriebenen Antastverfahren.

Mit einem definierten Polrastmoment erzeugt dieser Elektromotor im nicht aktivierten Zustand der Justiereinrichtung 30 mittels der Übersetzung der Getriebeeinheit 45 und deren Verbindung über das zweite Planetenträgerrad 57 mit der Mitnehmerwelle 13' und unter Nutzung der Reibungshemmung der Getriebeeinheit 45 ein verschleißunabhängiges Haltemoment für den mechanischen Verschleißnachsteller 10 und den Mitnehmer 10'.

Wenn die Justiereinrichtung 30 aktiviert ist, z.B. durch das Bremssteuergerät 35 oder eine separate Steuerung, überträgt die Antriebseinrichtung 31 ein Drehmoment des Elektromotors über die Getriebeeinheit 45 auf die Mitnehmerwelle 13'. Gleichzeitig wird über das mit dem zweiten Planetenträgerrad 57 in Eingriff stehende Transmissionsrad 39 mittels der Synchronisationsverbindung (hier die Transmissionswelle 38) die Nachstellerwelle 13 verdreht. Auf diese Weise kann das Lüftspiel eingestellt werden.

Beispielsweise kann mittels des mechanischen Verschleißnachstellers 10 und Mitnehmers 10' eine Grobeinstellung des Lüftspiels erfolgen, der sich dann mittels der Justiereinrichtung 30 eine Feineinstellung des Lüftspiels anschließt.

Bei Ausfall der elektrischen Justiereinrichtung 30 ist der mechanische Verschleißnachsteller 10 weiterhin funktionsfähig zur Sicherstellung einer Verschleißnachstellung. Ist der Antrieb des mechanischen Verschleißnachstellers 10 ausgefallen, so steht die elektrische Justiereinrichtung 30 zur Sicherstellung der Verschleißnachstellung weiterhin zur Verfügung.

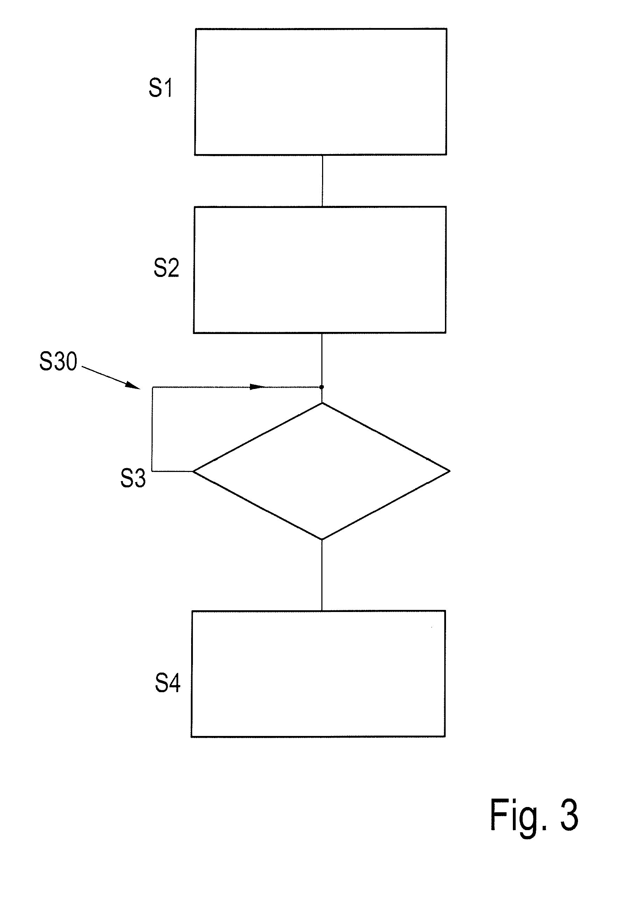

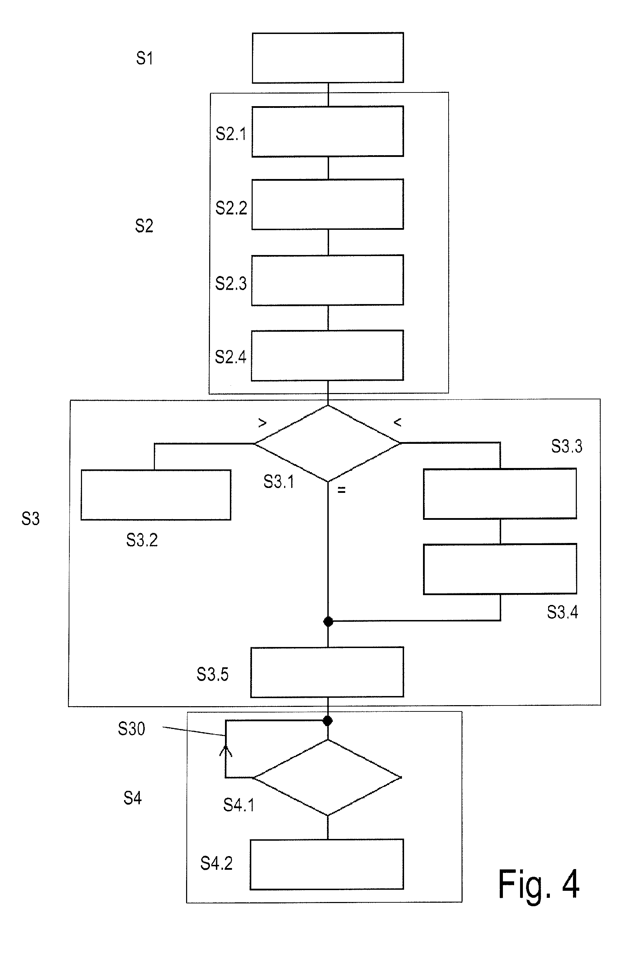

Fig. 3 und 4 zeigen Flussdiagramme eines ersten Ausführungsbeispiels eines erfindungsgemäßen Verfahrens zum Einstellen eines Lüftspiels. Dieses Verfahren wird auch "Antastmethode" bezeichnet.

Es sind zwei Fälle zu unterscheiden. In dem ersten Fall sind beispielsweise die Bremsbeläge neu eingebaut und das Lüftspiel ist auf einen vorher festlegbaren Lüftspielsollwert einzustellen. In dem zweiten Fall liegt Verschleiß vor und das aktuelle Lüftspiel wird wieder auf den Lüftspielsollwert eingestellt.

Zunächst wird der erste Fall behandelt.

In einem ersten Verfahrensschritt S1 wird ein Betriebszustand der Bremsanlage und somit der Scheibenbremse 1 ermittelt. Ein solcher Betriebszustand ist ein so genannter "nicht Bremszustand", nämlich der Zustand nach Belagwechsel oder Wartung. Dieser Zustand wird vom Wartungspersonal an einem Servicegerät, das mit dem Bremssteuergerät 35 verbindbar ist, eingestellt.

In einem zweiten Verfahrensschritt S2 wird dann der Reibepunkt ermittelt. Dies erfolgt mittels des elektrischen Verschleißnachstellers bzw. der Justiereinrichtung 30, wobei der Bremsbelag zugestellt wird, bis er mit der Bremsscheibe in dem Reibepunkt in Kontakt kommt. Dies trifft natürlich auch für den anderen Bremsbelag der Scheibenbremse 1 zu. Sobald der Reibepunkt erreicht ist, kann keine weitere Zustellung mehr erfolgen, der Elektromotor bleibt stehen. Der dabei mittels der Verstellspindelsensoreinheit 36 erfasste Messwert für den bei der Zustellung zurückgelegten Verstellweg wird als Referenzwert verwendet, welcher dem Reibepunkt entspricht.

Dann wird in einem dritten Verfahrensschritt S3 der Bremsbelag über die Justiereinrichtung 30 zurückgestellt, wobei die Verstellsensoreinheit 36 den Rückstellweg z.B. über den dabei von ihr erfassten Drehwinkel des Elektromotors der Antriebseinrichtung 31 ermittelt und mit einem vorher festgelegten Lüftspielsollwert vergleicht. Die Rückstellung des Bremsbelags erfolgt dann solange, bis der erfasste Rückstellweg mit dem vorher festgelegten Lüftspielsollwert übereinstimmt (S30). Der Lüftspielsollwert ist z.B. in einer Speichereinrichtung des Bremssteuergerätes 35 gespeichert.

In einem vierten Verfahrensschritt S4 wird der dem festgelegten Lüftspielwert Rückstellweg als aktuell eingestelltes Lüftspiel festgelegt und kann auch als solcher gespeichert werden.

Bei dem zweiten Fall mit vorliegendem Verschleiß wird ebenfalls in dem ersten Verfahrensschritt S1 wird ein Betriebszustand der Bremsanlage, d.h. der Scheibenbremse 1 ermittelt. Ein solcher Betriebszustand kann auch z.B. ein "nicht Bremszustand" sein, hier z.B. der Zustand nach jedem Start des Motors des Fahrzeugs, welches mit der Scheibenbremse 1 ausgerüstet ist. Der Betriebszustand ist über Parameter des Bremssteuergerätes feststellbar. Dabei kann auch ein Betriebszustand der Maschine des Fahrzeugs über ein Motorsteuergerät ermittelt werden, um einen "nicht Bremszustand" festzulegen.

In dem zweiten Verfahrensschritt S2 wird ebenfalls wie im ersten Fall der Reibepunkt ermittelt, jedoch mit dem Unterschied, dass der zuvor gespeicherte aktuelle Lüftspielwert aus Ausgangswert vor dem Zustellen verwendet wird. Dieser Ausgangswert wird mit dem im Reibepunkt ermittelten Wert verglichen, wobei die Differenz aufgrund des Verschleißes ein Maß für den Verschleiß sein kann und gespeichert wird.

Dann wird in dem dritten Verfahrensschritt S3 der Bremsbelag wieder über die Justiereinrichtung 30 auf den Lüftspielsollwert zurückgestellt und wie im vierten Verfahrensschritt S4 als aktuell eingestelltes Lüftspiel festgelegt.

Fig. 4 zeigt Teilschritte des Verfahrens nach Fig. 3.

Im zweiten Verfahrensschritt S2 wird in einem Teilschritt S2.1 zunächst die Antriebseinrichtung 31 mit dem Elektromotor aktiviert, um die Verstellspindeln 17, 17' mit dem Bremsbelag auf die Bremsscheibe zuzustellen.

Dabei wird in einem Teilschritt S2.2 der Drehwinkel des Elektromotors, z.B. durch Zählen von Impulsen des Elektromotors, die einem bestimmten Drehwinkel der Antriebswelle 32 entsprechen, von einem Zähler als ein Zählwert nₘₑₛₛ der gezählten Impulse ab Start des Elektromotors erfasst.

In einem Teilschritt S2.3 wird das Blockieren bzw. Stillstehen des Elektromotors durch Erreichen des Reibepunkts durch den zugestellten Bremsbelag erfasst.

Dann wird in einem Teilschritt S2.4 der Zählwert nₘₑₛₛ der Impulse vom Start des Elektromotors bis zum Stopp bei Blockieren als Zählwert n_{RP} dem Reibepunkt zugeordnet.

Im dritten Verfahrensschritt S3 wird nun in einem Teilschritt S3.1 festgestellt, ob der dem Reibepunkt zugeordnete Zählwert n_{RP} größer oder kleiner als ein vorheriger aktueller Lüftspielwert nₖ ist. Für den oben genannten ersten Fall bei Belagwechsel entspricht der aktuelle Lüftspielwert nₖ dem Lüftspielsollwert, der hier mit n_{LS} bezeichnet wird.

Auf diese Weise wird das vorhandene Lüftspiel gemessen.

Ist der dem Reibepunkt zugeordnete Zählwert n_{RP} größer (">") als der aktuelle Lüftspielwert nₖ, so liegt ein Verschleiß vor. Dieser Verschleißwert wird in einem Teilschritt S3.2 als Differenz aus dem Zählwert n_{RP} und dem aktuellen Lüftspielwert nₖ ermittelt und abgespeichert, z.B. in einer Speichereinrichtung des Bremssteuergerätes 35.

Ist der dem Reibepunkt zugeordnete Zählwert n_{RP} kleiner ("<") als der aktuelle Lüftspielwert nₖ, so kann sich das Lüftspiel aufgrund unterschiedlicher Einflüsse, z.B. aufgrund der Temperatur, verkleinert haben. Dieser Verkleinerungswert wird in einem Teilschritt S3.3 auch als Differenz aus dem Zählwert n_{RP} und dem aktuellen Lüftspielwert nₖ ermittelt und ebenfalls abgespeichert, z.B. in einem Fehlerspeicher der Speichereinrichtung des Bremssteuergerätes 35.

Dann wird in einem weiteren Teilschritt S3.4 der dem Reibepunkt zugeordnete Zählwert n_{RP} als Ausgangswert zum Einstellen des korrekten Lüftspiels verwendet. Dies kann z.B. dadurch erfolgen, dass der Zähler auf Null oder als Rückwärtszähler auf den Lüftspielsollwert n_{LS} gestellt wird. Es schließt sich dann ein Teilschritt S3.5 an.

Wenn im Teilschritt S3.1 der dem Reibepunkt zugeordnete Zählwert n_{RP} gleich ("_") dem aktuellen Lüftspielwert nₖ ist, wird auch zum Teilschritt S3.5 übergegangen.

In dem Teilschritt S3.5 wird der Elektromotor der Justiereinrichtung 30 in entgegengesetzter Drehrichtung zum Lösen des Bremsbelags eingeschaltet und der Zähler zählt wieder die Impulse des Elektromotors.

Im vierten Verfahrensschritt S4 wird der Zählwert nₘₑₛₛ in einem Teilschritt S4.1 mit dem Lüftspielsollwert n_{LS} (oder beim Rückwärtszählen mit Null) verglichen. Wird auf diese Weise der Lüftspielsollwert n_{LS} (oder beim Rückwärtszählen Null) erreicht, so wird der Elektromotor in einem Teilschritt S4.2 angehalten und das korrekte Lüftspiel ist eingestellt. Die Einstellung erfolgt unabhängig davon, ob das gemessene Lüftspiel zuvor kleiner oder größer als der Lüftspielsollwert n_{LS} war.

Dieses erste Ausführungsbeispiel des erfindungsgemäßen Verfahrens kann sowohl mit dem ersten als auch mit dem zweiten Ausführungsbeispiel der erfindungsgemäßen Scheibenbremse 1 durchgeführt werden.

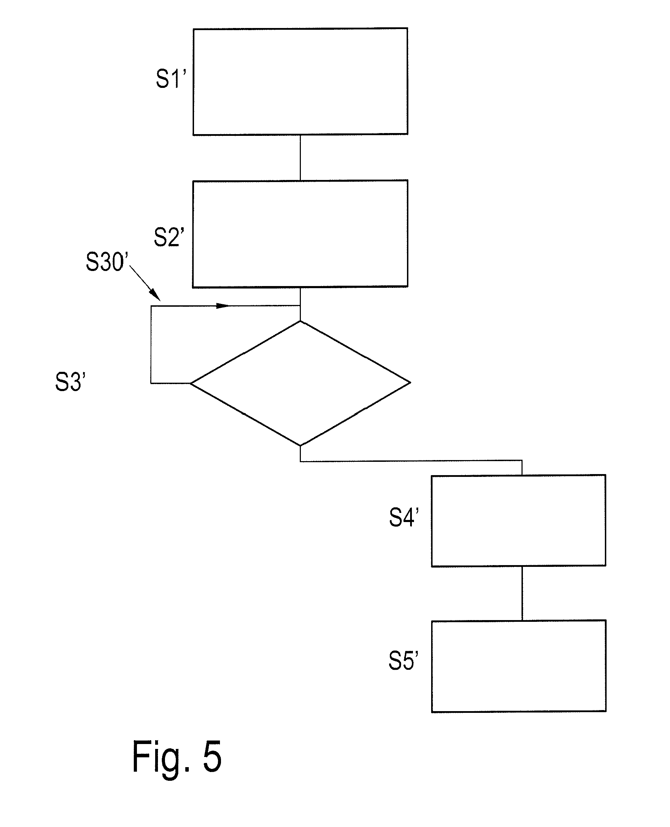

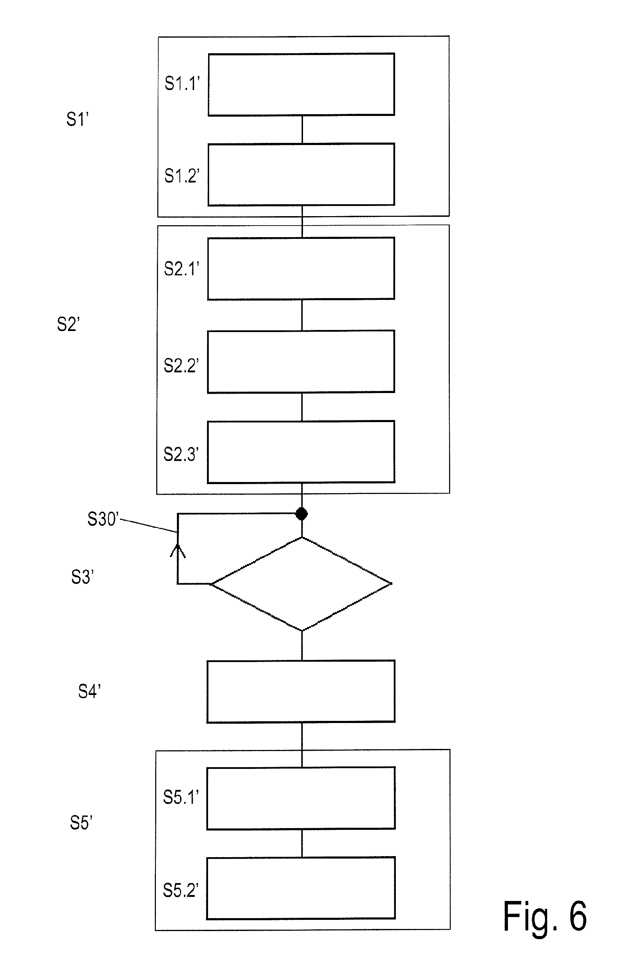

In Fig. 5 und 6 sind Flussdiagramme eines zweiten Ausführungsbeispiels des erfindungsgemäßen Verfahrens dargestellt. Dieses Verfahren wird auch als Anlegemethode bezeichnet.

In einem ersten Verfahrensschritt S1' wird ein Betriebszustand der Bremsanlage, d.h. der Scheibenbremse 1 wie im ersten Ausführungsbeispiel des Verfahrens ermittelt. In einem zweiten Verfahrensschritt S2' wird dann der Reibepunkt ermittelt, jedoch im Unterschied zum ersten Ausführungsbeispiel des Verfahrens erfolgt dies dadurch, dass die Scheibenbremse mit dem Bremsdrehhebel 4 zugespannt wird. Dabei wird die Schwenkbewegung des Bremsdrehhebels 4 von der Bremsdrehhebelsensoreinheit 37 gemessen. Der Verschleißnachsteller 10 (und der Mitnehmer 10' über die Synchronisationseinheit SYE1) wird von dem Bremsdrehhebel 4 wie oben beschrieben angetrieben und dreht sich, wenn ein Verschleiß vorliegt oder die Bremsbeläge nach Wechsel oder einer Wartung mit einem zu großen Lüftspiel eingebaut sind. Gleichzeitig wird eine Verdrehung der Verstellspindeln 17, 17' von der Verstellspindelsensoreinheit 36 erfasst. Entweder ist eine separate Verstellspindelsensoreinheit 36 vorgesehen, oder die Positionserkennung der Antriebseinrichtung 31 im zweiten Ausführungsbeispiel der Scheibenbremse 1 nach Fig. 2 wurde zuvor aktiviert.

In einem dritten Verfahrensschritt S3' wird festgestellt, wenn die Bewegung der Verstellspindeln 17, 17' stoppt. Dann ist der Reibepunkt erreicht. Das Bezugszeichen S30' deutet eine Schleife an, die solange durchlaufen wird, bis ein Stopp der Verstellspindeln 17, 17' vorliegt.

Dann wird in einem vierten Verfahrensschritt S4' der hierzu gehörige Verstellweg des Bremsdrehhebels 4 oder eines Zuspannelementes von Beginn der Zuspannung bis zum Stopp der Bewegung der Verstellspindeln 17, 17' als Lüftspielwert gespeichert.

In einem fünften Verfahrensschritt wird S5' wird die Scheibenbremse 1 wieder gelöst, wobei ein Lüftspiel durch Justieren mittels der Justiereinrichtung 30 eingestellt wird.

Fig. 6 zeigt Teilschritte des Verfahrens nach Fig. 5.

Im ersten Verfahrensschritt S1' wird in einem Teilschritt S1.1' ein Betriebszustand der Bremsanlage ermittelt. In einem nächsten Teilschritt S1.2' wird die Verstellspindelsensoreinheit 36 oder die Positionserkennung der Antriebseinrichtung 31 im zweiten Ausführungsbeispiel der Scheibenbremse 1 nach Fig. 2 aktiviert.

Im zweiten Verfahrensschritt S2' wird in einem Teilschritt S2.1' die Scheibenbremse 1 zugespannt, z.B. wird der Bremsdrehhebel 4 über einen Druckluftzylinder mit Anlegedruck beaufschlagt.

Die Bewegung der Verstellspindeln 17, 17' wird von der Verstellspindelsensoreinheit 36 oder der Positionserkennung der Antriebseinrichtung 31 in einem Teilschritt S2.2' erfasst.

Der Hebelschwenkhub bzw. Hebelweg oder die Verschwenkbewegung des Bremsdrehhebels 4 wird von der Bremsdrehhebelsensoreinheit 37 in einem Teilschritt S2.3' gemessen.

Im Verfahrensschritt S3' wird die Blockierung der Verstellspindeln 17, 17' von der Verstellspindelsensoreinheit 36 oder der Positionserkennung der Antriebseinrichtung 31 festgestellt.

Die Zuordnung des Messwertes des Hebelschwenkhubs des Bremsdrehhebels 4 dem Lüftspiel erfolgt bei der Blockierung der Verstellspindeln 17, 17' im Verfahrensschritt S4' mit Speicherung, z.B. in einer Speichereinrichtung des Bremssteuergerätes 35.

Im fünften Verfahrensschritt S5' wird in einem Teilschritt S5.1' die Scheibenbremse 1 gelöst, d.h. drucklos geschaltet und in einem Teilschritt S5.2' die Positionserkennung der Antriebseinrichtung 31 stromlos geschaltet, wobei eine separate Verstellsensoreinheit 36 und die Bremsdrehhebelsensoreinheit 37 ebenfalls ausgeschaltet werden, um Energie zu sparen.

Bei der Anlegemethode ist das Lüftspiel nach Durchführung bereits korrekt eingestellt. Wird nun bei weiteren Bremsungen von der Bremsdrehhebelsensoreinheit 37 oder dem daran angeschlossenen Bremssteuergerät 35 festgestellt, dass der Bremsdrehhebel 4 eine Verschwenkbewegung ausführt, die kleiner oder größer als die dem Lüftspielwert zugeordnete Verschwenkbewegung ist, so ist dies eine Abweichung, die an den Fehlerspeicher des Bremssteuergerätes 35 oder/und ein Service-System gemeldet wird. Dann kann das Bremssteuergerät 35 eine Korrektur des Lüftspiels durch die Justiereinheit 30 veranlassen, indem das erste Ausführungsbeispiel des erfindungsgemäßen Verfahrens durchgeführt wird.

Die Erfindung ist nicht auf die oben beschriebenen Ausführungsbeispiele beschränkt. Sie ist im Rahmen der beigefügten Ansprüche modifizierbar.

Es ist denkbar, dass in dem zweiten Ausführungsbeispiel der erfindungsgemäßen Scheibenbremse 1 nach Fig. 2 die Getriebeeinheit 45 mehr Getriebestufen als die zwei gezeigten aufweist. Dabei würde bei einem Ausfall des Elektromotors der Antriebseinrichtung 31 der mechanische Verschleißnachsteller 10, der sonst eine grobe Einstellung des Lüftspiels vornimmt, über die weiteren dann eingeschalteten oder zugeschalteten (mechanisches Zuschalten z.B. bei Stromausfall der Justiereinrichtung 30) Getriebestufen auch eine feinere Einstellung vornehmen können.

Die Justiereinrichtung 30 kann einen Warnmelder, z.B. elektrisch oder mechanisch aufweisen, der bei einem Ausfall des Elektromotors oder/und der elektrischen Antreibseinrichtung 31 dieses meldet, z.B. über einen optischen oder/und akustischen Melder. Dies kann z.B. ein Relais sein, dessen Kontakt im stromlosen Zustand geschlossen wird und den Melder aktiviert.

In dem ersten Ausführungsbeispiel nach Fig. 1 kann die Justiereinrichtung 30 z.B. anstelle mit dem Zahnring 28 mit der Verzahnung 22' der Gewindehülse 20' über ein geeignet verzahntes Antriebsritzel 33 in Eingriff stehen.

Weiterhin ist es denkbar, dass die zweite Synchronisationseinheit SYE2 anstelle der Synchronisationswelle 24 ein Zahnradgetriebe, z.B. Stirnradgetriebe, aufweist, welches in der Ebene des Zahnrings 28 angeordnet ist und mit diesem und einem weiteren Zahnring auf dem Kragen 21 der linken Gewindehülse 20 in Eingriff steht.

Im Fall einer einstempeligen Scheibenbremse kann bei Einsatz des zweiten Ausführungsbeispiels nach Fig. 2 das Transmissionsrad 39 das Abtriebsrad einer mechanischen Antriebseinheit 11 sein.

### Bezugszeichenliste

| | |
|---|---|
| 1 | Scheibenbremse |
| 2 | Bremssattel |
| 3, 3' | Spindeleinheit |
| 4 | Bremsdrehhebel |
| 5 | Nachstellantriebsabschnitt |
| 6 | Lagerwalze |
| 7 | Brücke |
| 8 | Platte |
| 9 | Abdeckung |
| 10 | Verschleißnachsteller |
| 10' | Mitnehmer |
| 11 | Antriebseinheit |
| 12 | Antriebsabschnitt |
| 13 | Nachstellerwelle |
| 13' | Mitnehmerwelle |
| 13'a | Kupplungsende |
| 14, 14' | Synchronrad |
| 15 | Synchronmittel |
| 16, 16' | Nachstellabtrieb |
| 17, 17' | Verstellspindel |
| 18, 18' | Außengewinde |
| 19, 19' | Druckstück |
| 20, 20' | Gewindehülse |
| 21, 21' | Kragen |
| 22, 22' | Verzahnung |
| 23, 23' | Durchgangsbohrung |
| 24 | Synchronisationswelle |
| 25, 25' | Synchronisationsverzahnung |
| 26 | Buchse |
| 27 | Durchgangsbohrung |
| 28 | Zahnring |
| 29 | Rückstellfeder |
| 30 | Justiereinrichtung |
| 31 | Antriebseinrichtung |
| 31a | Anschlussleitung |
| 32 | Antriebswelle |
| 32a | Antriebsende |
| 32b | Lagerende |
| 32c | Lager |
| 33 | Antriebsritzel |
| 34 | Antriebslager |
| 35 | Bremsteuergerät |
| 36 | Verstellspindelsensoreinheit |
| 37 | Bremsdrehhebelsensoreinheit |
| 38 | Transmissionswelle |
| 39 | Transmissionsrad |
| 40 | Motorgehäuse |
| 41 | Anschlussabschnitt |
| 42 | Lagerschild |
| 43 | Öffnung |
| 44 | Dichtung |
| 45 | Getriebeeinheit |
| 46 | Erste Getriebestufe |
| 47 | Zweite Getriebestufe |
| 48 | Erstes Sonnenrad |
| 49 | Erstes Planetenrad |
| 50 | Erste Planetenradachse |
| 51 | Erstes Planetenträgerrad |
| 52 | Erster Planetenträger |
| 53 | Sonnenradabschnitt |
| 54 | Zweites Sonnenrad |
| 55 | Zweites Planetenrad |
| 56 | Zweite Planetenradachse |
| 57 | Zweites Planetenträgerrad |
| 58 | Zweiter Planetenträger |
| 59 | Kupplungsabschnitt |
| 60 | Verzahnung |
| 61 | Lager |
| 62 | Lageraufnahme |
| 63 | Kupplungselement |
| SYE1 | Erste Synchronisationseinheit |
| SYE2 | Zweite Synchronisationseinheit |
| S1...4; S1'...5' | Verfahrensschritte |
| S30; S30' | Schleife |

## Patentansprüche

1. Scheibenbremse (1), insbesondere für ein Kraftfahrzeug, mit einer Zuspannvorrichtung, vorzugsweise mit einem Bremsdrehhebel (4), mit einer Belagverschleißnachstellvorrichtung, welche mindestens einen mechanischen Verschleißnachsteller (10, 10'), der vorzugsweise in eine Spindeleinheit (3, 3') der Scheibenbremse (1) einsetzbar ist, und mindestens eine elektrische Justiereinrichtung (30) aufweist, wobei der mindestens eine mechanische Verschleißnachsteller (10, 10') vorzugsweise mit dem Bremsdrehhebel (9) gekoppelt ist,
**dadurch gekennzeichnet, dass**
der mindestens eine mechanische Verschleißnachsteller (10, 10') und die mindestens eine elektrische Justiereinrichtung (30) gemeinsam auf einer Seite, vorzugsweise der Zuspannseite, der Scheibenbremse (1) angeordnet sind.

2. Scheibenbremse (1) nach Anspruch 1, **dadurch gekennzeichnet, dass** der mindestens eine mechanischen Verschleißnachsteller (10, 10') und die mindestens eine elektrische Justiereinrichtung (30) unabhängig voneinander mit der Spindeleinheit (3, 3') der Scheibenbremse (1) gekoppelt sind.

3. Scheibenbremse (1) nach Anspruch 2, **dadurch gekennzeichnet, dass** die mindestens eine elektrische Justiereinrichtung (30) mit einer Gewindehülse (20, 20'), welche in einer Brücke (7) der Scheibenbremse (1) drehbar aufgenommen ist und mit einer Verstellspindel (17, 17') der Spindeleinheit (3, 3') zusammenwirkt, in Eingriff steht.

4. Scheibenbremse (1) nach Anspruch 3, aufweisend mindestens zwei Spindeleinheiten (3, 3'), wobei der mechanische Verschleißnachsteller (10) mit einem Mitnehmer (10') über eine erste Synchronisationseinheit (SYE1) gekoppelt ist, **dadurch gekennzeichnet, dass** jede Verstellspindel (17, 17') der mindestens zwei Spindeleinheiten (3, 3') mit jeweils einer Gewindehülse (20, 20') zusammenwirkt, wobei die Gewindehülsen (20, 20') über eine zweite Synchronisationseinheit (SYE2) gekoppelt sind.

5. Scheibenbremse (1) nach Anspruch 1, **dadurch gekennzeichnet, dass** die mindestens eine elektrische Justiereinrichtung (30) mit einer Nachstellerwelle (13, 13') des mechanischen Verschleißnachstellers (10, 10') gekoppelt ist.

6. Scheibenbremse (1) nach Anspruch 5, aufweisend mindestens zwei Spindeleinheiten (3, 3'), wobei der mechanische Verschleißnachsteller (10), mit einem Mitnehmer (10') über eine erste Synchronisationseinheit (SYE1) gekoppelt ist, **dadurch gekennzeichnet, dass** die mindestens eine elektrische Justiereinrichtung (30) mit der ersten Synchronisationseinrichtung (SYE1) gekoppelt ist.

7. Scheibenbremse (1) nach Anspruch 6, **dadurch gekennzeichnet, dass** die elektrische Justiereinrichtung (30) eine Getriebeeinheit (45) mit mindestens zwei Getriebestufen (46, 47) aufweist, von denen eine mit der ersten Synchronisationseinrichtung (SYE1) gekoppelt ist.

8. Scheibenbremse (1) nach Anspruch 6 oder 7, **dadurch gekennzeichnet, dass** die elektrische Justiereinrichtung (30) über einer der Nachstellwellen (13, 13') des mechanischen Verschleißnachstellers (10, 10') angeordnet ist.

9. Scheibenbremse (1) nach einem der vorhergehenden Ansprüche, **dadurch gekennzeichnet, dass** die Justiereinrichtung (30) eine elektrische, vorzugsweise elektronisch gesteuerte, Antriebseinrichtung (31) aufweist.

10. Scheibenbremse (1) nach Anspruch 9, **dadurch gekennzeichnet, dass** die Justiereinrichtung (30) ein Gehäuse (40, 42) aufweist, in welchem die Antriebseinrichtung (31) und eine Getriebeeinheit (45) aufgenommen sind und welches an einem Bremssattel (2) der Scheibenbremse (1) angebracht ist.

11. Scheibenbremse (1) nach einem der vorhergehenden Ansprüche, **dadurch gekennzeichnet, dass** die Scheibenbremse (1) mindestens eine Verstellspindelsensoreinheit (36) aufweist.

12. Scheibenbremse (1) nach Anspruch 9, **dadurch gekennzeichnet, dass** die Justiereinrichtung (30) die mindestens eine Verstellspindelsensoreinheit (36) aufweist.

13. Scheibenbremse (1) nach einem der vorhergehenden Ansprüche, **dadurch gekennzeichnet, dass** die Scheibenbremse (1) mindestens eine Bremsdrehhebelsensoreinheit (37) aufweist.

14. Druckluftbetätigte Scheibenbremse (1) nach einem der vorhergehenden Ansprüche.

15. Verfahren zum Einstellen eines Lüftspiels einer Scheibenbremse (1), wobei die Scheibenbremse (1) nach einem der vorhergehenden Ansprüche ausgeführt ist,
**gekennzeichnet durch** die Verfahrensschritte
(S1) Ermitteln eines Betriebszustands der Scheibenbremse (1);
(S2) Ermitteln eines Reibepunkts **durch** Anlegen des Bremsbelags an die Bremsscheibe der Scheibenbremse (1) mittels der mindestens einen elektrischen Justiereinrichtung (30);
(S3) Zurückstellen des Bremsbelags mittels der mindestens einen elektrischen Justiereinrichtung (30); und
(S4) Einstellen des Lüftspiels der Scheibenbremse (1).

16. Verfahren nach Anspruch 15, **dadurch gekennzeichnet, dass** der Verfahrensschritt (S2) Ermitteln des Reibepunkts folgende Teilschritte umfasst:
(S2.1) Aktivieren der elektrischen Justiereinrichtung (30) zur Verstellung von Verstellspindeln (17, 17') zum Zustellen des Bremsbelags;
(S2.2) Erfassen eines Drehwinkels eines Elektromotors der elektrischen Justiereinrichtung (30) zur Ermittlung eines Verstellwegs des Bremsbelags ab Start des Elektromotors;
(S2.3) Ermitteln des Blockierens bzw. Stillstehens des Elektromotors durch Erreichen des Reibepunkts; und
(S2.4) Zuordnen des erfassten Drehwinkels des Elektromotors bei Erreichen des Reibepunkts einem aktuellen Lüftspiel und Verwenden als Referenzwert des Reibepunkts.

17. Verfahren nach Anspruch 16, **dadurch gekennzeichnet, dass** der Verfahrensschritt (S3) Zurückstellen des Bremsbelags folgende Teilschritte umfasst:
(S3.1) Vergleichen des aktuellen Lüftspiels mit einem vorher festlegbaren Lüftspielsollwert;
(S3.2) Speichern einer Differenz als Verschleißwert, wenn das aktuelle Lüftspiel größer als der vorher festlegbare Lüftspielsollwert ist, oder
(S3.3) Speichern einer Differenz als Verkleinerungswert, wenn das aktuelle Lüftspiel kleiner als der vorher festlegbare Lüftspielsollwert ist;
(S3.4) Verwenden des aktuellen Lüftspiels als Referenzwert; und
(S3.5) Aktivieren der elektrischen Justiereinrichtung (30) zur Verstellung der Verstellspindeln (17, 17') zum Lösen des Bremsbelags und Erfassen des Drehwinkels des Elektromotors der elektrischen Justiereinrichtung (30) zur Ermittlung des Verstellwegs des Bremsbelags ab Start des Elektromotors.

18. Verfahren nach Anspruch 17, **dadurch gekennzeichnet, dass** der Teilschritt (S3.5) Aktivieren der elektrischen Justiereinrichtung (30) ausgeführt wird, wenn der Teilschritt (S3.1) Vergleichen des aktuellen Lüftspiels keine Differenz ergibt.

19. Verfahren nach Anspruch 16 oder 17, **dadurch gekennzeichnet, dass** der Verfahrensschritt (S4) Einstellen des Lüftspiels folgende Teilschritte umfasst:
(S4.1) Vergleichen des ermittelten Verstellwegs mit dem vorher festlegbaren Lüftspielsollwert; und
(S4.2) Einstellen des Lüftspiels durch Anhalten des Elektromotors der elektrischen Justiereinrichtung (30) bei Erreichen des vorher festlegbaren Lüftspielsollwerts.

20. Verfahren zum Einstellen eines Lüftspiels einer Scheibenbremse (1), wobei die Scheibenbremse (1) nach einem der Ansprüche 1 bis 13 ausgeführt ist, **gekennzeichnet durch** die Verfahrensschritte
(S1') Ermitteln eines Betriebszustands der Scheibenbremse (1);
(S2') Ermitteln eines Reibepunkts **durch** Anlegen des Bremsbelags an die Bremsscheibe der Scheibenbremse (1) **durch** Zuspannen der Scheibenbremse (1), wobei ein Verstellweg eines Zuspannelementes, vorzugsweise des Bremsdrehhebels (4), erfasst wird, und wobei der mechanische Verschleißnachsteller (10, 10') betätigt wird;
(S3') Erfassen eines Stillstands einer Verstellspindel (17, 17');
(S4') Speichern des erfassten Verstellwegs bei Stillstand der Verstellspindel (17, 17') als aktuelles Lüftspiel; und
(S5') Einstellen des Lüftspiels der Scheibenbremse (1) **durch** Justieren mittels der elektrischen Justiereinrichtung.

21. Verfahren nach Anspruch 20, **dadurch gekennzeichnet, dass** der Verfahrensschritt (S1) Ermitteln des Betriebszustands folgende Teilschritte umfasst:
(S1.1) Ermitteln des Betriebszustands der Scheibenbremse (1); und
(S1.2) Aktivieren einer Verstellspindelsensoreinheit (36) oder einer Positionserkennung eines Elektromotors der elektrischen Justiereinrichtung (30).

22. Verfahren nach Anspruch 21, **dadurch gekennzeichnet, dass** der Verfahrensschritt (S2) Ermitteln des Reibepunkts folgende Teilschritte umfasst:
(S2.1) Beaufschlagen eines Druckluftzylinders mit Anlegedruck oder Aktivieren einer Zuspanneinrichtung der Scheibenbremse (1);
(S2.2) Erfassen der Bewegung der Verstellspindel (17, 17') mittels der Verstellspindelsensoreinheit (36) oder der Positionserkennung des Elektromotors der Justiereinrichtung (30); und
(S2.3) Erfassen einer Verstellbewegung, vorzugsweise des Hebelwegs des Bremsdrehhebels (4).

23. Verfahren nach Anspruch 22, **dadurch gekennzeichnet, dass** der Verfahrensschritt (S5) Lösen der zugespannten Scheibenbremse (1) und Einstellen des Lüftspiels der Scheibenbremse (1) folgende Teilschritte umfasst:
(S5.1) Lösen der Scheibenbremse (1);
(S5.2) Ausschalten der Verstellspindelsensoreinheit (36) oder der Positionserkennung des Elektromotors der Justiereinrichtung (30); und
(S5.3) Einstellen des Lüftspiels der Scheibenbremse (1) durch Justieren mittels der elektrischen Justiereinrichtung (30).

24. Verfahren nach Anspruch 23, **dadurch gekennzeichnet, dass** das Justieren mittels der elektrischen Justiereinrichtung (30) zum Einstellen des Lüftspiels zur Vergrößerung des Lüftspiels durchgeführt wird, wenn das im Verfahrensschritt (S4') ermittelte aktuelle Lüftspiel kleiner als ein vorher festlegbarer Lüftspielsollwert ist, und dass das Justieren mittels der elektrischen Justiereinrichtung (30) zum Einstellen des Lüftspiels zur Verkleinerung des Lüftspiels durchgeführt wird, wenn das im Verfahrensschritt (S4') ermittelte aktuelle Lüftspiel größer als der vorher festlegbare Lüftspielsollwert ist.
